# EUROPÄISCHE PATENTANMELDUNG

(11) **EP 1 752 676 A2**
(43) Veröffentlichungstag der Anmeldung: **14.02.2007**
(21) Anmeldenummer: 06013944.1
(22) Anmeldetag: 05.07.2006
(51) Int. Cl.: F16D 65/092, F16D 65/097

(54) **Bremsbelag für eine Scheibenbremse**

(30) Priorität: 12.08.2005 DE 102005038297
(71) Anmelder: Federal-Mogul Friction Products GmbH, 65520 Bad Camberg (DE)
(72) Erfinder: Emmett, Robert, 56477 Rennerod (DE); Strauss, Wilfried, 69483 Wald-Michelbach (DE)
(74) Vertreter: Becker Kurig Straus

(57) **Zusammenfassung**

Die vorliegende Erfindung bezieht sich auf einen Bremsbelag (10) für eine Scheibenbremse, wobei der Bremsbelag mindestens ein Belagsegment (1) und eine Rückenplatte (2) umfasst, wobei das Belagsegment mittels einer Feder (3) an der Rückenplatte befestigt ist und die Rückenplatte mindestens eine Vertiefung (2'') und mindestens eine Öffnung (2') aufweist, wobei sich die Feder durch die Öffnung hindurch erstreckt und dabei mindestens ein Arm (3') der Feder in die mindestens eine Vertiefung der Rückenplatte eingreift, wodurch das Belagsegment in einer Arretierposition an der Rückenplatte der Scheibenbremse fixiert ist.

## Beschreibung

### HINTERGRUND DER ERFINDUNG

Die vorliegende Erfindung bezieht sich auf einen Bremsbelag für eine Scheibenbremse, insbesondere bezieht sich die vorliegende Erfindung auf einen Bremsbelag, welcher mindestens ein Belagsegment in der mindestens einen Rückenplatte einer Scheibenbremse aufweist, wobei das mindestens eine Belagsegment mit einer Feder an der Rückenplatte fixiert ist.

### STAND DER TECHNIK

Scheibenbremsen des Standes der Technik setzen sich üblicherweise aus mindestens einer Bremsscheibe und mindestens einem Bremssattel mit mindestens zwei Bremsbelägen zusammen.

Dabei werden Scheibenbremsen in der Industrie- und Anlagentechnik, Beförderungs-, Transport- und Verkehrsmitteltechnik, sowie in der Kraftfahrzeugtechnik eingesetzt, um Wellen oder Räder abzubremsen. In dem Bremssattel verwendete Bremsbeläge bestehen üblicherweise aus einem Trägerelement und einem Reibbelag. Die Hauptvorteile von Scheibenbremsen gegenüber den heute teilweise noch üblichen Trommelbremsen sind das geringere Gewicht, die bessere Wärmeabfuhr und eine einfachere Wartung.

Bei den heutzutage verwendeten Scheibenbremsen wird der Bremsbelag über eine Öffnung von außen in den Bremssattel gesteckt und mit Niederhaltefedem und Verriegelungen in der Bremse gehalten. Diese Form der Befestigung hat den Vorteil, dass der Bremssattel zum Auswechseln der Bremsbeläge nicht ausgebaut oder abgenommen werden muss.

Somit ist es beispielsweise bei einem PKW möglich, dass nur der Reifen abmontiert werden muss, um die Bremsbeläge zu wechseln.

Allerdings weisen heutige Scheibenbremsen den Nachteil auf, dass die Demontage der Kombination Belag-Feder-Verriegelung-Bremsscheibe arbeits- und zeitintensiv ist.

### ZUSAMMENFASSUNG DER ERFINDUNG

Aufgabe der vorliegenden Erfindung ist es daher, einen Bremsbelag anzugeben, bei dem eine Befestigung des Bremsbelages an der Scheibenbremse fest und sicher ist und der Bremsbelag einfach, rasch und kostengünstig demontiert werden kann.

Obige Aufgabe löst die vorliegende Erfindung mittels eines Bremsbelages einer Scheibenbremse, wobei der Bremsbelag mindestens ein Belagsegment und eine Rückenplatte umfasst, wobei das Belagsegment mittels einer Feder an der Rückenplatte befestigt ist, dadurch gekennzeichnet, dass die Rückenplatte mindestens eine Vertiefung und mindestens eine Öffnung aufweist, wobei sich die Feder durch die Öffnung hindurch erstreckt, wobei mindestens ein Arm der Feder in die mindestens eine Vertiefung der Rückenplatte eingreift, wodurch das Belagsegment in einer Arretierposition an der Rückenplatte der Scheibenbremse fixiert ist.

Dadurch ergibt sich der Vorteil, dass die Rückenplatte bei einem Wechsel des Bremsbelages in der Scheibenbremse bleiben kann, womit somit die Demontage und Montage des Bremsbelages einfach, rasch und kostengünstig durchgeführt werden kann. Die Demontage des Bremsbelages erfolgt dabei mittels eines Stiftes, der zwischen Rückenplatte und Feder eingeführt wird, wobei es zu einer Lösung der Arretierung der Feder kommt und somit das Belagsegment des Bremsbelages einfach entfernt werden kann.

Weiter ist es bevorzugt, dass bei dem Bremsbelag für eine Scheibenbremse gemäß der vorliegenden Erfindung das Fixieren des Belagsegmentes in einer Arretierposition an der Rückenplatte durch Einrasten erfolgt. Dadurch ergibt sich bei der vorliegenden Erfindung der Vorteil, dass der Bremsbelag sicher und fest an der Rückenplatte fixiert ist und es zu keiner Verschiebung der Feder relativ zu der Rückenplatte aufgrund der Spannkraft der Feder kommt.

Weiter ist es bevorzugt, dass bei dem Bremsbelag für eine Scheibenbremse gemäß der vorliegenden Erfindung die Rückenplatte an ihrer Unterseite eine nutförmige Einkerbung aufweist. Dadurch ergibt sich bei dem Bremsbelag der vorliegenden Erfindung der Vorteil, dass das Belagsegment besser an der Rückenplatte fixiert werden kann.

Weiter ist es bevorzugt, dass bei dem Bremsbelag für eine Scheibenbremse gemäß der vorliegenden Erfindung die Feder und das Belagsegment fest miteinander verbunden sind. Dadurch ergibt sich bei der vorliegenden Erfindung der Vorteil, dass das Belagsegment rasch und einfach von der Rückenplatte demontiert werden kann und ein Demontieren der Rückenplatte von der Scheibenbremse nicht notwendig ist.

Weiter ist es bevorzugt, dass bei dem Bremsbelag für eine Scheibenbremse gemäß der vorliegenden Erfindung die Feder eine Niederhaltefeder ist. Dadurch ergibt sich der Vorteil, dass die Feder das Belagselement fest an die Rückenplatte drückt.

Weiter ist es bevorzugt, dass bei dem Bremsbelag für eine Scheibenbremse gemäß der vorliegenden Erfindung die Feder mit mindestens einem Arm um eine Achse C-C' drehbar ist. Dadurch ergibt sich der Vorteil, dass es zu einer verbesserten Zugwirkung des Belagsegments in Richtung der Rückenplatte der Scheibenbremse und damit zu einer stärkeren Fixierung kommt.

Weiter ist es bevorzugt, dass bei dem Bremsbelag für eine Scheibenbremse gemäß der vorliegenden Erfindung die Feder einen oberen, mittleren und unteren Bereich aufweist, wobei der obere Bereich der Feder den mindestens einen Arm aufweist, der mittlere Bereich die Geometrie einer Schraubendruckfeder bzw. Schraubenzugfeder mit einer bestimmten Federkonstante aufweist und der untere Bereich die Form eines geschlossenen gekrümmten Toroids aufweist, wobei der untere Bereich in seiner Längsausrichtung entlang der Achse A-A' eine Ausdehnung L aufweist, die größer als die Ausdehnung L' des mindestens einen Arms ist.

Dadurch ergibt sich bei der vorliegenden Erfindung der Vorteil, dass es zu einer festen und sicheren Arretierung der Feder in der Rückenplatte der Scheibenbremse kommt.

Weiter ist es bevorzugt, dass bei dem Bremsbelag für eine Scheibenbremse gemäß der vorliegenden Erfindung der obere, mittlere und untere Bereich der Feder fest miteinander verbunden sind. Dadurch ergibt sich bei der vorliegenden Erfindung der Vorteil, dass die Feder eine vorbestimmte Federkonstante aufweist und es somit zu einer entsprechenden Arretierung des Belagsegmentes an der Rückenplatte kommt.

Weiter ist es bevorzugt, dass bei dem Bremsbelag für eine Scheibenbremse gemäß der vorliegenden Erfindung der obere, mittlere und untere Bereich der Feder aus gleichen Materialien gefertigt sind. Dadurch ergibt sich bei der vorliegenden Erfmdung der Vorteil, dass die Feder eine vorbestimmte Federkonstante aufweist und es somit zu einer entsprechenden Arretierung des Belagsegmentes an der Rückenplatte kommt.

Weiter ist es bevorzugt, dass bei dem Bremsbelag für eine Scheibenbremse gemäß der vorliegenden Erfindung das Belagsegment einen rechteckigen Querschnitt entlang der Achse B-B' aufweist. Dadurch ergibt sich bei der vorliegenden Erfindung der Vorteil, dass das Belagsegment an die Geometrie einer Bremsscheibe der Scheibenbremse entsprechend angepasst werden kann und die Scheibenbremse eine entsprechende Bremswirkung aufweist.

Weiter ist es bevorzugt, dass bei dem Bremsbelag für eine Scheibenbremse gemäß der vorliegenden Erfindung das Belagsegment einen quadratischen Querschnitt entlang der Achse B-B' aufweist. Dadurch ergibt sich bei der vorliegenden Erfindung der Vorteil, dass das Belagsegment an die Geometrie einer Bremsscheibe der Scheibenbremse entsprechend angepasst werden kann und die Scheibenbremse eine entsprechende Bremswirkung aufweist.

Weiter ist es bevorzugt, dass bei dem Bremsbelag für eine Scheibenbremse gemäß der vorliegenden Erfindung das Belagsegment einen kreisförmigen Querschnitt entlang der Achse B-B' aufweist. Dadurch ergibt sich bei der vorliegenden Erfindung der Vorteil, dass das Belagsegment an die Geometrie einer Bremsscheibe der Scheibenbremse entsprechend angepasst werden kann und die Scheibenbremse eine entsprechende Bremswirkung aufweist.

Weiter ist es bevorzugt, dass bei dem Bremsbelag für eine Scheibenbremse gemäß der vorliegenden Erfindung das Belagsegment einen ovalen Querschnitt entlang der Achse B-B' aufweist. Dadurch ergibt sich bei der vorliegenden Erfindung der Vorteil, dass das Belagsegment an die Geometrie einer Bremsscheibe der Scheibenbremse entsprechend angepasst werden kann und die Scheibenbremse eine entsprechende Bremswirkung aufweist.

Weiter ist es bevorzugt, dass bei dem Bremsbelag für eine Scheibenbremse gemäß der vorliegenden Erfindung die Öffnungen der Rückenplatte radial auf der Rückenplatte gebildet sind. Dadurch ergibt sich bei der vorliegenden Erfmdung der Vorteil, dass das Belagsegment an die Geometrie einer Bremsscheibe der Scheibenbremse entsprechend angepasst werden kann und die Scheibenbremse eine entsprechende Bremswirkung aufweist.

Weiter ist es bevorzugt, dass bei dem Bremsbelag für eine Scheibenbremse gemäß der vorliegenden Erfmdung die Feder aus Metall gefertigt ist. Dadurch ergibt sich bei der vorliegenden Erfindung der Vorteil, dass eine entsprechende Fixierung des Belagsegments aufgrund der entsprechenden Federkonstante der Feder an der Rückenplatte der Scheibenbremse möglich ist.

Weiter ist es bevorzugt, dass bei dem Bremsbelag für eine Scheibenbremse gemäß der vorliegenden Erfindung die Feder aus Stahl gefertigt ist. Dadurch ergibt sich bei der vorliegenden Erfindung der Vorteil, dass eine entsprechende Fixierung des Belagsegments aufgrund der entsprechenden Federkonstante der Feder an der Rückenplatte der Scheibenbremse möglich ist.

Weiter ist es bevorzugt, dass bei dem Bremsbelag für eine Scheibenbremse gemäß der vorliegenden Erfindung die Feder aus mindestens einer Metalllegierung gefertigt ist. Dadurch ergibt sich bei der vorliegenden Erfindung der Vorteil, dass eine entsprechende Fixierung des Belagsegments aufgrund der entsprechenden Federkonstante der Feder an der Rückenplatte der Scheibenbremse möglich ist.

Weiter ist es bevorzugt, dass bei dem Bremsbelag für eine Scheibenbremse gemäß der vorliegenden Erfindung die Feder aus mindestens einem hitzebeständigen Kunststoff gefertigt ist. Dadurch ergibt sich bei der vorliegenden Erfindung der Vorteil, dass eine entsprechende Fixierung des Belagsegments aufgrund der entsprechenden Federkonstante der Feder an der Rückenplatte der Scheibenbremse möglich ist.

Weiter ist es bevorzugt, dass bei dem Bremsbelag für eine Scheibenbremse gemäß der vorliegenden Erfindung die Rückenplatte aus Metall gefertigt ist. Dadurch ergibt sich bei der vorliegenden Erfindung der Vorteil, dass eine entsprechende Fixierung des Belagsegments an der Rückenplatte der Scheibenbremse möglich ist.

Weiter ist es bevorzugt, dass bei dem Bremsbelag für eine Scheibenbremse gemäß der vorliegenden Erfindung die Rückenplatte aus Stahl gefertigt ist. Dadurch ergibt sich bei der vorliegenden Erfindung der Vorteil, dass eine entsprechende Fixierung des Belagsegments an der Rückenplatte der Scheibenbremse möglich ist.

Weiter ist es bevorzugt, dass bei dem Bremsbelag für eine Scheibenbremse gemäß der vorliegenden Erfindung die Rückenplatte aus mindestens einer Metalllegierung gefertigt ist.

Dadurch ergibt sich bei der vorliegenden Erfindung der Vorteil, dass eine entsprechende Fixierung des Belagsegments an der Rückenplatte der Scheibenbremse möglich ist.

Weiter ist es bevorzugt, dass bei dem Bremsbelag für eine Scheibenbremse gemäß der vorliegenden Erfindung die Rückenplatte aus einem hitzebeständigen Kunststoff gefertigt ist. Dadurch ergibt sich bei der vorliegenden Erfindung der Vorteil, dass eine entsprechende Fixierung des Belagsegments an der Rückenplatte der Scheibenbremse möglich ist.

Weiter ist es bevorzugt, dass bei dem Bremsbelag für eine Scheibenbremse gemäß der vorliegenden Erfindung das Belagsegment aus Metall gefertigt ist. Dadurch ergibt sich bei der vorliegenden Erfindung der Vorteil, dass das Belagsegment eine entsprechende Bremswirkung an der Bremsscheibe der Scheibenbremse und eine höhere Lebensdauer aufweist.

Weiter ist es bevorzugt, dass bei dem Bremsbelag für eine Scheibenbremse gemäß der vorliegenden Erfindung das Belagsegment aus einer Metalllegierung gefertigt ist. Dadurch ergibt sich bei der vorliegenden Erfindung der Vorteil, dass das Belagsegment eine entsprechende Bremswirkung an der Bremsscheibe der Scheibenbremse und eine höhere Lebensdauer aufweist.

Weiter ist es bevorzugt, dass bei dem Bremsbelag für eine Scheibenbremse gemäß der vorliegenden Erfindung das Belagsegment aus hitzebeständigem Kunststoff gefertigt ist. Dadurch ergibt sich bei der vorliegenden Erfmdung der Vorteil, dass das Belagsegment eine entsprechende Bremswirkung an der Bremsscheibe der Scheibenbremse und eine höhere Lebensdauer aufweist.

Weitere Vorteile, Merkmale und Anwendungsmöglichkeiten der vorliegenden Erfindung ergeben sich aus der nachfolgenden Beschreibung von bevorzugten Ausführungsformen in Verbindung mit der Zeichnung.

### KURZE BESCHREIBUNG DER ZEICHNUNG

Die Fig. 1 ist eine schematische Querschnittsansicht des Bremsbelags der vorliegenden Erfindung.

Die Fig. 2 ist eine schematische Ansicht des Bremsbelages der vorliegenden Erfindung.

Die Fig. 3 ist eine schematische Draufsicht auf die Rückenplatte, Feder und das Belagsegment des Bremsbelages der vorliegenden Erfindung.

Die Fig. 4 ist eine schematische Querschnittsansicht die die Feder sowie die Rückenplatte des Bremsbelages der vorliegenden Erfindung zeigt.

### DETAILLIERTE BESCHREIBUNG DER ZEICHNUNG

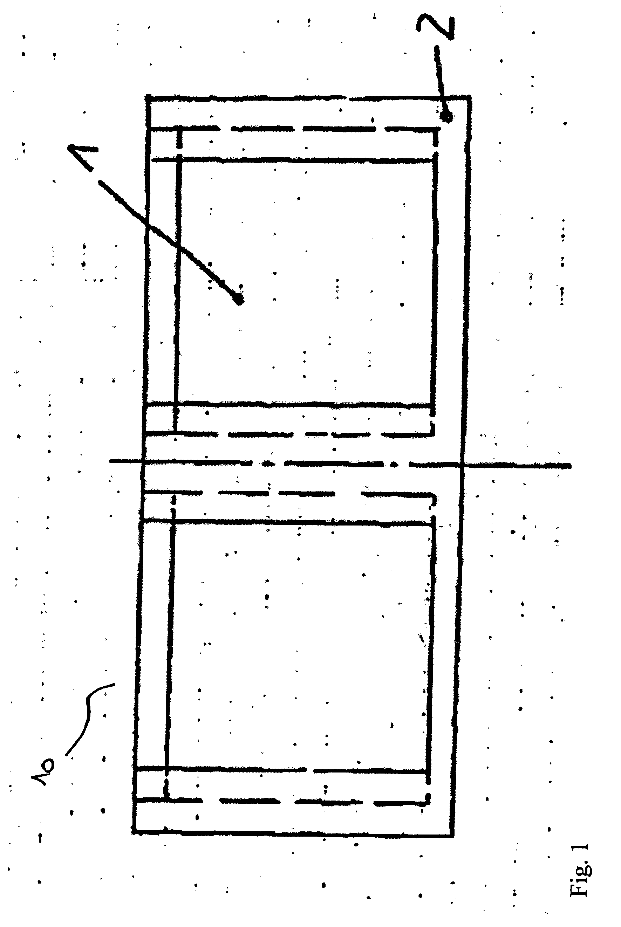

Die Fig. 1 ist eine schematische Querschnittsansicht des Bremsbelags 10 der vorliegenden Erfindung.

Dabei ist mindestens ein Belagsegment 1 an einer Rückenplatte 2 mittels einer Feder 3 (nicht dargestellt) fixiert.

Das Belagsegment 1 kann gemäß einer Ausführungsform der vorliegenden Erfindung im Querschnitt entlang der Achse B-B' eine rechteckige Form aufweisen.

Das Belagsegment kann im Querschnitt ebenso weitere Ausführungsformen aufweisen, die quadratisch, kreisförmig oder oval sind.

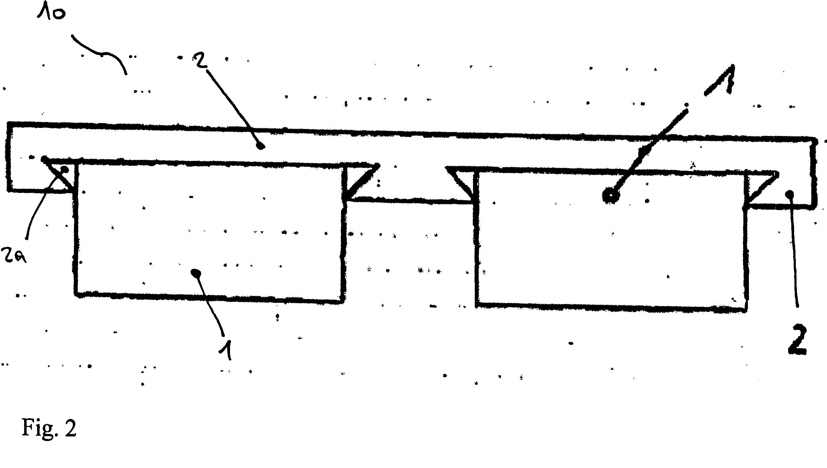

In der Fig. 2 ist eine schematische Seitenansicht der Anordnung des Bremsbelages 10 an der Rückenplatte 2 der vorliegenden Erfindung zu sehen. Dabei ist ersichtlich, dass die Rückenplatte 2 eine nutförmige Einkerbung 2a aufweist, wodurch das Belagsegment an der Rückenplatte 2 besser fixiert wird.

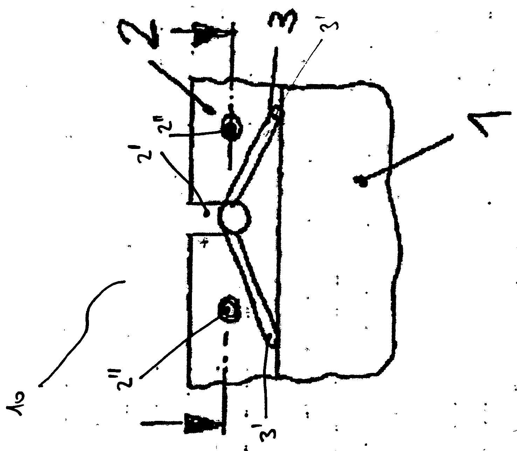

Die Fig. 3 ist eine schematische Draufsicht auf die Rückenplatte 2, Feder 3 und das Belagsegment 1 des Bremsbelages 10 der vorliegenden Erfindung.

Dabei ist die Öffnung 2' ersichtlich, in welche die Feder 3 mit ihrem Mittelteil 3b von der Seite in die Öffnung 2' hineingeschoben wird. Ebenso sind zwei Vertiefungen 2" dargestellt in welche die beiden Arme 3' nach Einführen der Feder 3 durch die Öffnung 2' einrasten und die Feder samt dem daran befestigten Belagsegment an der Rückenplatte 2 in einer Arretierungsposition fixieren.

Die Feder 3 und das Belagsegment 2 sind dabei fest miteinander verbunden, wodurch es zu einem weiteren Halt des Belagsegmentes 2 an der Rückenplatte 2 der Scheibenbremse kommt.

Darüber hinaus kommt es durch das Verdrehen der Arme 3' der Feder 3 in Richtung der Vertiefungen 2" zu einer weiteren Zugkraft der Feder 3 in Richtung der Rückenplatte 2, die bewirkt, dass das Belagsegment 1 in Richtung der Rückenplatte 2 gedrückt wird.

Nachdem die Arme 3' der Feder 3 in die Vertiefungen 2" eingerastet sind, kommt es zu einer fixen Arretierung der Feder 3 und somit zu einer Fixierung des Belagsegments 1 an der Rückenplatte, womit sich ein Bremsbelag ergibt, der rasch in eine Scheibenbremse montiert oder nach Verschleiß demontiert werden kann und falls gewünscht, durch einen neuen Bremsbelag ersetzt werden kann.

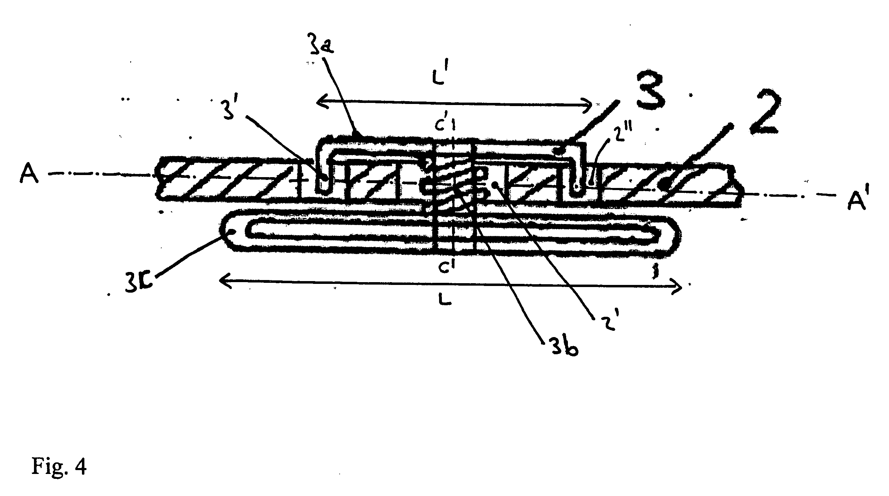

Die Fig. 4 ist eine schematische Querschnittsansicht die die Feder sowie die Rückenplatte des Bremsbelages der vorliegenden Erfindung zeigt.

Dabei ist die Öffnung 2' ersichtlich, in welche die Feder 3 mit ihrem Mittelteil 3b von der Seite in die Öffnung 2' hineingeschoben wird. Ebenso sind zwei Vertiefungen 2" dargestellt in welche die beiden Arme 3' nach Einführen der Feder 3 durch die Öffnung 2' einrasten und die Feder samt dem daran befestigten Belagsegment an der Rückenplatte 2 in einer Arretierungsposition fixieren.

Weiter sind ein oberer 3a, mittlerer 3b und unterer Bereich der Feder 3 dargestellt, wobei die Länge L des unteren Bereichs, der die Form eines offenen bzw. geschlossenen Toroids aufweisen kann, entlang der Achse A-A' größer als die Länge L' der Federarme 3' ist.

Dadurch, dass die Längen L und L' verschieden sind, kommt es zu einer weiteren Stabilisierung des Belagsegments 1 mittels der Feder 3 an der Rückenplatte 2.

An den unteren 3c Bereich der Feder 3 schließt sich das Belagsegment 1, das hier nicht dargestellt ist.

Die Feder 3 und das Belagsegment 2 sind dabei fest miteinander verbunden, wodurch es zu einem weiteren Halt des Belagsegmentes 2 an der Rückenplatte 2 der Scheibenbremse kommt.

Darüber hinaus kommt es durch das Verdrehen der Arme 3' der Feder 3 in Richtung der Vertiefungen 2 ", wie bereits in Figur 3 ausgeführt worden ist, zu einer weiteren Zugkraft der Feder 3 in Richtung der Rückenplatte 2, die bewirkt, dass das Belagsegment 1 in Richtung der Rückenplatte 2 gedrückt wird.

Nachdem die Arme 3' der Feder 3 in die Vertiefungen 2" eingerastet sind, kommt es zu einer fixen Arretierung der Feder 3 und somit zu einer Fixierung des Belagsegments 1 an der Rückenplatte, womit sich ein Bremsbelag ergibt, der rasch in eine Scheibenbremse montiert oder nach Verschleiß demontiert werden kann und falls gewünscht, durch einen neuen Bremsbelag ersetzt werden kann.

Bei Demontage des Belagsegments 1 von der Rückenplatte 2 wird dabei ein Stift verwendet, der zwischen dem mindestens einen Arm 3' der Feder 3 und der Rückenplatte 2 eingeführt wird, wobei sich der mindestens eine Arm 3' aus der mindestens einen Vertiefung 2" der Rückenplatte 2 löst und damit die Arretierung des Belagsements 1 mittels einer weiteren Drehung der Feder 3 um die Achse C-C' gelöst wird.

Somit ist es anschließend möglich das verschlissene Belagsegment 1 des Bremsbelages durch ein neues zu ersetzen und in der umgekehrten Reihenfolge, wie vorhergehend beschrieben, wieder erneut zu montieren.

## Patentansprüche

1. Bremsbelag (10) für eine Scheibenbremse, wobei der Bremsbelag (10) mindestens ein Belagsegment (1) und eine Rückenplatte (2) umfasst, wobei das Belagsegment (1) mittels einer Feder (3) an der Rückenplatte (2) befestigt ist, **dadurch gekennzeichnet, dass** die Rückenplatte (2) mindestens eine Vertiefung (2") und mindestens eine Öffnung (2') aufweist, wobei sich die Feder (3) durch die Öffnung hindurch erstreckt, wobei mindestens ein Arm (3') der Feder (3) in die mindestens eine Vertiefung (2") der Rückenplatte (2) eingreift, wodurch das Belagsegment (1) in einer Arretierposition an der Rückenplatte (2) der Scheibenbremse fixiert ist.

2. Bremsbelag (10) für eine Scheibenbremse nach Anspruch 1, wobei das Fixieren des mindestens einen Belagsegmentes (1) in einer Arretierposition an der Rückenplatte (2) mittels Einrasten erfolgt.

3. Bremsbelag (10) für eine Scheibenbremse nach den einem der vorhergehenden Ansprüche, wobei die Rückenplatte (2) an ihrer Unterseite eine nutförmige Einkerbung (2a) aufweist.

4. Bremsbelag (10) für eine Scheibenbremse nach einem der vorhergehenden Ansprüche, wobei die Feder (3) und das Belagsegment (1) fest miteinander verbunden sind.

5. Bremsbelag (10) für eine Scheibenbremse nach einem der vorhergehenden Ansprüche, wobei die Feder (3) eine Niederhaltefeder ist.

6. Bremsbelag (10) für eine Scheibenbremse nach einem der vorhergehenden Ansprüche, wobei die Feder (3) mit mindestens einem Arm (3') um eine Achse C-C' drehbar ist.

7. Bremsbelag (10) für eine Scheibenbremse nach einem der vorhergehenden Ansprüche, wobei die Feder (3) einen oberen (3a), mittleren (3b) und unteren Bereich (3c) aufweist, wobei der obere Bereich (3a) der Feder (3) den mindestens einen Arm (3') aufweist, der mittlere Bereich (3b) die Geometrie einer Schraubendruckfeder bzw. Schraubenzugfeder mit einer bestimmten Federkonstante aufweist und der untere Bereich (3c) die Form eines geschlossenen gekrümmten Toroids aufweist, wobei der untere Bereich (3c) in seiner Längsausrichtung entlang der Achse A-A' eine Ausdehnung L aufweist, die größer als die Ausdehnung L' des mindestens einen Arms ist.

8. Bremsbelag (10) für eine Scheibenbremse nach einem der vorhergehenden Ansprüche, wobei der obere (3a), mittlere (3b) und untere (3c) Bereich der Feder (3) fest miteinander verbunden sind.

9. Bremsbelag (10) für eine Scheibenbremse nach Anspruch 8, wobei der obere (3a), mittlere (3b) und untere (3c) Bereich der Feder (3) aus gleichen Materialien gefertigt sind.

10. Bremsbelag (10) für eine Scheibenbremse nach einem der vorhergehenden Ansprüche, wobei das Belagsegment einen rechteckigen Querschnitt entlang der Achse B-B' aufweist.

11. Bremsbelag (10) für eine Scheibenbremse nach einem der vorhergehenden Ansprüche, wobei das Belagsegment einen quadratischen Querschnitt entlang der Achse B-B' aufweist.

12. Bremsbelag (10) für eine Scheibenbremse nach einem der vorhergehenden Ansprüche, wobei das Belagsegment einen kreisförmigen Querschnitt entlang der Achse B-B' aufweist.

13. Bremsbelag (10) für eine Scheibenbremse nach einem der vorhergehenden Ansprüche, wobei das Belagsegment einen ovalen Querschnitt entlang der Achse B-B' aufweist.

14. Bremsbelag (10) für eine Scheibenbremse nach einem der vorhergehenden Ansprüche, wobei die Öffnungen (2') der Rückenplatte (2) radial auf der Rückenplatte (2) gebildet sind.

15. Bremsbelag (10) für eine Scheibenbremse nach einem der vorhergehenden Ansprüche, wobei die Feder (3) aus Metall gefertigt ist.

16. Bremsbelag (10) für eine Scheibenbremse nach einem der vorhergehenden Ansprüche, wobei die Feder (3) aus Stahl gefertigt ist.

17. Bremsbelag (10) für eine Scheibenbremse nach einem der vorhergehenden Ansprüche, wobei die Feder (3) aus mindestens einer Metalllegierung gefertigt ist.

18. Bremsbelag (10) für eine Scheibenbremse nach einem der vorhergehenden Ansprüche, wobei die Feder (3) aus mindestens einem hitzebeständigen Kunststoff gefertigt ist.

19. Bremsbelag (10) für eine Scheibenbremse nach einem der vorhergehenden Ansprüche, wobei die Rückenplatte (2) aus Metall gefertigt ist.

20. Bremsbelag (10) für eine Scheibenbremse nach einem der vorhergehenden Ansprüche, wobei die Rückenplatte (2) aus Stahl gefertigt ist.

21. Bremsbelag (10) für eine Scheibenbremse nach einem der vorhergehenden Ansprüche, wobei die Rückenplatte (2) aus mindestens einer Metalllegierung gefertigt ist.

22. Bremsbelag (10) für eine Scheibenbremse nach einem der vorhergehenden Ansprüche, wobei die Rückenplatte (2) aus einem hitzebeständigen Kunststoff gefertigt ist.

23. Bremsbelag (10) für eine Scheibenbremse nach einem der vorhergehenden Ansprüche, wobei das Belagsegment (1) aus Metall gefertigt ist.

24. Bremsbelag (10) für eine Scheibenbremse nach einem der vorhergehenden Ansprüche, wobei das Belagsegment (1) aus einer Metalllegierung gefertigt ist.

25. Bremsbelag (10) für eine Scheibenbremse nach einem der vorhergehenden Ansprüche, wobei das Belagsegment (1) aus hitzebeständigem Kunststoff gefertigt ist.
